# EUROPEAN PATENT SPECIFICATION

(11) **EP 2 912 295 B1**
(45) Date of publication and mention of the grant of the patent: **20.07.2016**
(21) Application number: 13766123.7
(22) Date of filing: 03.09.2013
(51) Int. Cl.: F02M 26/00

(54) **METHOD OF CONTROLLING THE OPERATION OF AN INTERNAL COMBUSTION ENGINE, AND A CONTROL SYSTEM FOR CONTROLLING THE OPERATION OF AN INTERNAL COMBUSTION ENGINE**
VERFAHREN ZUR STEUERUNG DES BETRIEBS EINES VERBRENNUNGSMOTORS UND STEUERUNGSSYSTEM ZUR STEUERUNG DES BETRIEBS EINES VERBRENNUNGSMOTORS
PROCÉDÉ DE COMMANDE DU FONCTIONNEMENT D'UN MOTEUR À COMBUSTION INTERNE, ET SYSTÈME DE COMMANDE POUR COMMANDER LE FONCTIONNEMENT D'UN MOTEUR À COMBUSTION INTERNE

(30) Priority: 17.09.2012 FI 20125957
(43) Date of publication of application: 02.09.2015
(73) Proprietor: Wärtsilä Finland Oy, 65380 Vaasa (FI)
(72) Inventor: BEIJAR, Matias, FI-65100 Vaasa (FI); BJÖRQVIST, Jerker, FI-20540 Turku (FI); BÖLING, Jari, FI-20540 Turku (FI); KAAS, Tom, FI-65410 Sundom (FI); ÖSTER, Anders, FI-66520 Veikkaala (FI); ÖSTMAN, Fredrik, FI-65100 Vaasa (FI)
(74) Representative: Genip Oy
(86) International application number: PCT/FI2013/050844
(87) International publication number: WO 2014/041238

(56) References cited:
- US-A- 5 791 146
- US-A1- 2011 094 224
- US-B1- 6 216 461

## Description

### Technical field

The invention relates to internal combustion piston engines and exhaust gas recycling therein.

Invention relates to method of controlling the operating an internal combustion engine, in which method combustion gas is pressurized by a first compressor and introduced into the engine, fuel is combusted in the engine making use of the pressurized combustion gas thus forming exhaust gas, exhaust gas is removed from the engine, a portion of the exhaust gas is recirculated by including the portion into the combustion gas prior to its introduction into the engine, and the portion of the exhaust gas is pressurized by a controllable second compressor and introduced into the combustion gas.

Invention relates also to control system for controlling the operation of an internal combustion engine comprising a first compressor for pressurizing the combustion gas to be introduced into the engine, an exhaust gas recycling conduit system in which a second compressor is arranged for pressurizing recycled exhaust gas to be introduced into the engine.

### Background art

Turbochargers are well-known for supplying air to the intake of an internal combustion engine at pressures above ambient pressure.

Generally, a turbocharger comprises an exhaust gas driven turbine wheel mounted on a rotatable shaft within a turbine housing. Rotation of the turbine wheel rotates a compressor wheel mounted on the other end of the shaft within a compressor housing. In order to facilitate control of the operation of the turbo charger, the turbine may be of a fixed or variable geometry type. Variable geometry turbines differ from fixed geometry turbines in that the size or function of the inlet passageway can be varied to control the gas introduction into the turbine so that the power output of the turbine can be varied to suite varying engine demands.

During the operation of an internal combustion engine nitrogen oxides (NOx) are formed. NOx is produced during the combustion process in an engine due to high temperature in the presence of oxygen and nitrogen. In order to meet the requirements of exhaust emissions exhaust gas recirculation (EGR) systems may be used, in which a portion of the engine's exhaust gas is recirculated back to the combustion chambers of the engine. This is typically achieved by directing an amount of the exhaust gas from the exhaust manifold to the inlet manifold of the engine. This is commonly called as external recirculation. The recirculated exhaust gas lowers the peak temperature produced during combustion. As NOx production increases with increased peak temperature, recirculation of exhaust gas reduces the amount of undesirable NOx formed. Turbochargers may form part of the EGR system.

In engines with high inlet manifold pressure, it is necessary to increase the pressure of the recirculated exhaust-gases e.g. by means of a compressor electrically or turbine driven. There are a number of publications disclosing the use of compressor for the purpose.

For example in publication US 2010/122530A1 there is disclosed such a system. The EGR system for an engine with a turbocharger comprises a second turbocharger which operates in parallel with the main turbocharger. The second turbocharger, herein referred to as the EGR turbocharger, has a turbine part, which is powered by a portion of the engine exhaust. The compressor part of the turbocharger is arranged to feed a portion of the engine exhaust gas, after pressurizing the exhaust gas, to the inlet manifold of the engine. As such, the turbine part of the EGR turbocharger drives the EGR turbocharger's compressor part so that the EGR turbocharger feeds a portion of engine exhaust gas to the engine intake.

US 6216461 B1 discloses an exhaust gas recirculation and control system for an internal combustion engine. The recirculated exhaust gas is pumped through the EGR duct by an EGR compressor driven by a dedicated EGR drive that is independently controllable. This way the EGR flow rate capacity of the system is not dictated by, or limited, by factors such as engine exhaust flow rate. A controller modulates power delivery to the drive means in response to at least one operating condition parameter in order to achieve a desired EGR flow rate. The system comprises also a controller operably connected with the EGR drive to modulate power delivery to the EGR drive and thereby control an EGR flow rate. The controller modulates the EGR output of the compressor in response to various input parameters from sensors, each of which provides a signal to indicate a particular operating parameter.

For closed-loop operation, the signal may also include an appropriate feedback signal corresponding to the operation of the EGR drive or EGR compressor, such as a signal indicating drive speed of the drive or compressor, position of the EGR drive or EGR compressor, EGR flow rate, or another suitable signal indicating the output of the EGR system.

A problem relating to exhaust gas recirculation by means of an EGR compressor is to arrange proper EGR operation and control for various operational conditions of the engine.

### Disclosure of the Invention

The above mention problem of the prior art is solved by the method of intependet claim 1.

According to an embodiment of the invention the feedback signal is acquired as speed ratio defined as a ratio of the second signal to the first signal.

According to an embodiment of the invention the reference signal is acquired based on predefined map of reference signal values stored in or made readable to the reference signal processing unit.

The above mention problem of the prior art is solved by the control system of intependent claim 4.

According to an embodiment of the invention the controller unit is arranged to decrease the control signal value in case difference between the feedback signal and the reference signal is higher than predetermined set value.

According to an embodiment of the invention the controller unit is arranged to increase the control signal value in case difference between the feedback signal and the reference signal is lower than predetermined set value.

According to an embodiment of the invention that the reference signal processing unit is arranged to acquire a reference signal based on predefined map of reference signal values stored in or made readable to the reference signal processing unit.

### Brief Description of Drawings

In the following, the invention will be described with reference to the accompanying exemplary, schematic drawings, in which
Figure 1 illustrates an internal combustion engine according to an embodiment of the invention; and
Figure 2 illustrates other embodiments of the invention.

### Detailed Description of Drawing

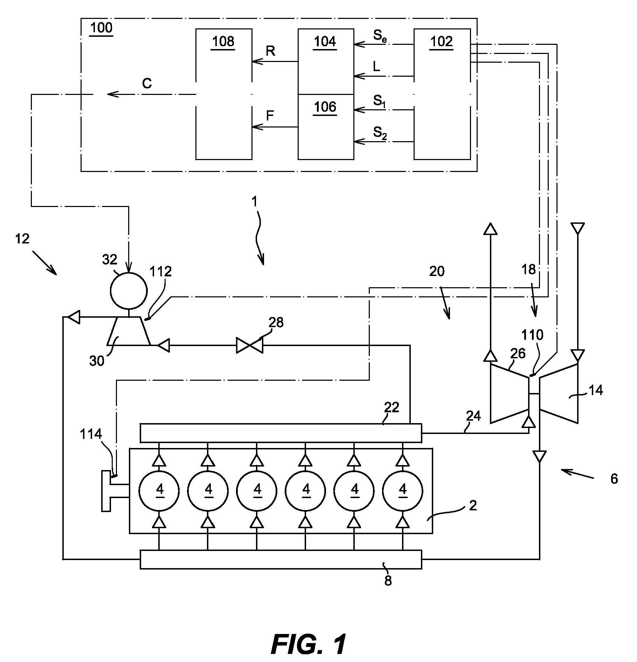

Figure 1 depicts schematically an internal combustion engine 1. The engine comprises a body 2 in which several cylinders 4 are arranged with in-line arrangement. The engine further comprises an inlet gas conduit system 6 leading through an inlet manifold 8 to each cylinder 4 of the engine 1. The inlet gas conduit system is arranged for conveying inlet gas, typically air, to the combustion chambers of the engine. The engine comprises also an exhaust gas system 20 and an exhaust gas recirculation conduit 12 system connecting the exhaust gas conduit system 20 with the inlet gas conduit system 6.

The inlet manifold 8 is connected to an outlet of a compressor part 14 of a turbocharger unit 18. The compressor part of the turbocharger unit 18 is called here as the first compressor. The exhaust gas conduit system 20 comprises an exhaust manifold 22 from which an exhaust conduit 24 extends to an inlet of a turbine part 26 of the turbocharger unit 18. The turbine part 26 and the compressor part 18 of the turbocharger are coupled with each other in a manner known as such. The compressor is thus operated by means of the turbine part. The turbine part may be provided with a waste-gate or other control system (not shown).

The exhaust gas recirculation conduit system 12 connects the exhaust gas conduit system 20 with the inlet gas conduit system 6 so that a portion of the exhaust gas flow of the engine may be recirculated back to the engine. The actual location at which the exhaust gas recirculation conduit system 12 joins to the exhaust gas system 20 may vary according to specific installation and such possible locations are apparent to those skilled in the art.

The exhaust gas recirculation conduit system 12 comprises in this embodiment an on/off valve 28 in order to permit or allow the recirculation by opening or closing the valve when so desired.

The exhaust gas recirculation conduit system 12 in the engine comprises a second compressor 30 in order to pressurize recirculated portion of the exhaust gas to desired level. The second compressor 30 is controllable so that the amount of the recirculated exhaust gas flow may be efficiently controlled at all operational situations of the engine. In the embodiment of figure 1 the second compressor 30 is provided with a motor 32 which may be driven by electric energy. The inlet side of the second compressor 30 is connected to the exhaust manifold 22 of the engine to receive exhaust gas of the engine. An outlet of the compressor 30 is connected to the inlet gas conduit system 6 by means of the exhaust gas recirculation conduit system 12.The inlet side of the second compressor 30 may be in some installations connected to a location downstream the turbine part 26 in the exhaust gas conduit system 20.

In the operation of the engine combustion air is introduced to the engine through an inlet gas conduit and the air is supercharged by the first compressor by making use of energy of the exhaust gases of the engine arranged to flow in and exhaust gas system. And, a controllable amount of exhaust gas is recirculated to the inlet gas conduit system and back to the combustion process of the engine.

Even if not shown here the exhaust gas recirculation conduit system 12 may comprise a gas cleaning device, such as hot gas particulate material filter, and a gas cooler unit.

According to an embodiment of the invention the internal combustion engine and its operation is controlled so that while running the engine combustion gas is pressurized by the first compressor 26 and pressurized combustion gas is introduced into the engine, in which fuel is combusted making use of the pressurized combustion gas. Combustion gas is oxygen containing gas, preferably air. Combustion of the fuel form exhaust gas which is removed from the engine via the exhaust gas system 20. A controllable portion of the exhaust gas is recirculated back to the engine and the combustion process by including the portion into the combustion gas prior to its introduction into the engine.

Next, the portion of the exhaust gas is pressurized by the second compressor 30 and is introduced into the combustion gas. The second compressor is controlled to provide work in relation to the operation of the first compressor. More specifically, the second compressor is controlled based on a feedback signal which is defined in relation to the rotational speed of the first compressor.

According to an embodiment of the invention this practised so that at least a first signal indicative to the rotational speed of the first compressor is acquired and a second signal indicative to the rotational speed of the second compressor is acquired. The first signal and the second signal are used to generate the feedback signal representing the operational status of the second compressor in respect to the first compressor i.e. the feedback signal is acquired as a function of the first signal and the second signal. In its simplest form the first signal indicative to the rotational speed is the actual rotational speed of the first compressor and second signal indicative to the rotational speed is the actual rotational speed of the second compressor.

According to an advantageous embodiment of the invention the feedback signal is generated as a speed ratio defined as a ratio of the second signal to the first signal and feedback signal is used in a process of providing a control signal to the second compressor.

In the method the process of providing a control signal comprises acquiring a reference signal and establishing the control signal by comparing the feedback signal to the reference signal. The reference signal is a function of engine load and engine's rotational speed.

According to an embodiment of the invention the reference signal is acquired based on predefined and/or interpolated map of reference signal values stored in or made readable to the reference signal processing unit. An example of such a map is shown in the table below for a specific engine the maximum rotational speed of which is 1100 rpm. It is clear that the invention is applicable to engines capable of rotating at other speeds also.

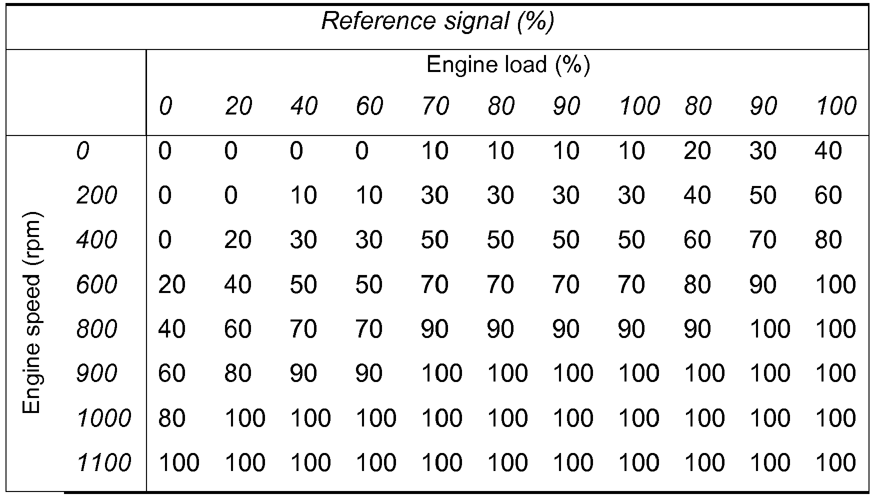

According to an embodiment of the invention a speed difference is defined as a difference between the feedback signal and the reference signal, and the speed difference is used to generate a control signal to the second compressor. According to an embodiment of the invention the control signal value is decreased in case the difference between the feedback signal and the reference signal is higher than predetermined set value. Respectively, the control signal value is increased in case the difference between the feedback signal and the reference signal is lower than predetermined set value.

Further, the engine is provided with a control system 100 for controlling the operation of the engine according to the invention. The control system 100 comprises an input unit 102, which is arranged to receive measurement data indicating the operational status of the engine. The input unit 102 is in data transmission connection with numerous senders positioned at certain surveillance targets of the engine, particularly such as the first compressor with a speed sensor 110 measuring the rotational speed of the first compressor, the second compressor with a speed sensor 112 measuring the rotational speed of the second compressor, engine speed sensor, and engine load sensor or calculated load information, which in figure 1 is illustrated as a combined sensor 114.

Further the control system comprises a reference signal processing unit 104. The reference signal processing unit is arranged to acquire a reference signal based on at least the engine speed Sₑ and engine load L, which are read or acquired by the input unit 102 and thereafter made available to the reference signal processing unit 104. The reference signal processing unit has access to a predefined map of reference signal values stored in or made readable to the reference signal processing unit.

Additionally the control system comprises a feedback signal processing unit 106 arranged to acquire a feedback signal F. According to an embodiment of the invention the feedback signal F is a ratio of the rotational speed of the second compressor S₂ and the rotational speed S₁ of the first compressor. The control system further comprises a controller unit 108 which is arranged to acquire a control signal C by comparing the feedback signal acquired by the feedback signal processing unit to the reference signal acquired by reference signal processing unit 104.

The controller unit is arranged to perform a comparison between the feedback signal and the reference signal. It is arranged to decrease the control signal value in case difference between the feedback signal and the reference signal is higher than predetermined set value. Respectively, the controller unit is arranged to increase the control signal value in case difference between the feedback signal to the reference signal is lower than predetermined set value.

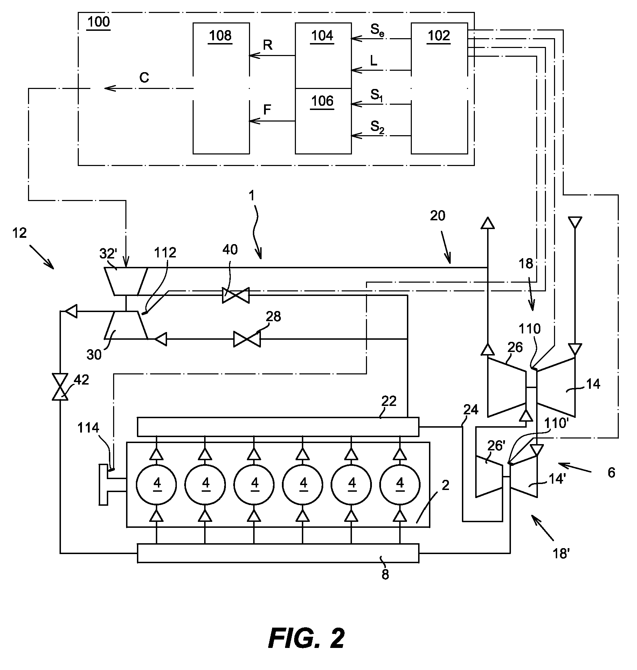

In figure 1 the controlling of the second compressor 30 is accomplished by controlling the motor 32 operating the compressor. In figure 2 there is shown another embodiment of the invention in which the second compressor is operated by a second turbine 32' through which exhaust gas of the engine is arranged to flow performing work in the turbine. In this case the controlling of the second compressor 30 may be accomplished by a control valve 40 in the exhaust gas recirculation conduit system 12 and/or a control valve 42 in the exhaust gas recirculation conduit 12 system. In other respect the embodiment of figure 2 corresponds to that in figure 1.

In figure 2 there is shown also another embodiment of the invention in which in addition to the first compressor unit 14 there is a second compressor unit 14' i.e. two turbo chargers are connected in series. Thus, it is clear that the turbocharger unit i.e. the turbine part and/or the compressor part, may comprise more than two stages as well. In such an embodiment the rotational speed of the first compressor means preferably the rotation speed of the compressor operating at a higher pressure level.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. For example the invention may be well applied to two stroke or four stroke engines operating with various cycles, such as the otto- or diesel cycle. The engine configuration may also vary from in-line engine to e.g. V engine. The details mentioned in connection with any embodiment above may be used in connection with another embodiment when such combination is technically feasible.

## Claims

1. Method of controlling the operation of an internal combustion engine (1), in which method
- combustion gas is pressurized by a first compressor (14) and introduced into the engine;
- fuel is combusted in the engine making use of the pressurized combustion gas thus forming exhaust gas;
- exhaust gas is removed from the engine;
- a portion of the exhaust gas is recirculated by including the portion into the combustion gas prior to its introduction into the engine;
- the portion of the exhaust gas is pressurized by a controllable second compressor (30) and introduced into the combustion gas;
- a first signal being the rotational speed of the first compressor (14) is acquired;
- a second signal being the rotational speed of the second compressor (30) is acquired;
- feedback signal is acquired as a function of the first signal and the second signal;
- reference signal is acquired as a function of engine load and engine's rotational speed; and
- a control signal used for controlling the operation of the second compressor (30) is established by comparing the feedback signal to the reference signal.

2. Method of operating an internal combustion engine according to claim 1, **characterized in that** the feedback signal is acquired as speed ratio defined as a ratio of the second signal to the first signal.

3. Method of operating an internal combustion engine according to claim 1, **characterized in that** the reference signal is acquired based on predefined map of reference signal values stored in or made readable to the reference signal processing unit.

4. Control system for controlling the operation of an internal combustion engine (1) comprising a first compressor (14) for pressurizing the combustion gas to be introduced into the engine (1); an exhaust gas recycling conduit system (12) in which a second compressor (30) is arranged for pressurizing recycled exhaust gas to be introduced into the engine;
which control system is comprised of:
- input unit (102), arranged to receive measurement data indicating the operational status of the engine, including the rotational speed of the first compressor, (14) the rotational speed of the second compressor (30), engine speed, and engine load;
- reference signal processing unit (104) arranged to acquire a reference signal (R) based on at least the engine speed (Sₑ) and engine load (L);
- feedback signal processing unit (106) arranged to acquire a feedback signal (F) as a function of the rotational speed (S₂) of the second compressor and the rotational speed (S₁) of the first compressor;
- controller unit (108) arranged to acquire a control signal (C) used for controlling the operation of the second compressor by comparing the feedback signal (F) to the reference signal (R).

5. Control system according to claim 4, **characterized in that** the controller unit is arranged to decrease the control signal value in case difference between the feedback signal and the reference signal is higher than predetermined set value.

6. Control system according to claim 4, **characterized in that** the controller unit is arranged to increase the control signal value in case difference between the feedback signal and the reference signal is lower than predetermined set value.

7. Control system according to claim 4, **characterized in that** the reference signal processing unit is arranged to acquire a reference signal based on predefined map of reference signal values stored in or made readable to the reference signal processing unit.

## Patentansprüche

1. Verfahren zur Steuerung des Betriebs eines Verbrennungsmotors (1), wobei bei dem Verfahren
- ein Verbrennungsgas von einem ersten Kompressor (14) unter Druck gesetzt wird und in den Motor eingeleitet wird;
- Kraftstoff in dem Motor verbrannt wird, indem das unter Druck gesetzte Verbrennungsgas verwendet wird, wodurch ein Abgas gebildet wird;
- Abgas aus dem Motor entfernt wird;
- ein Teil des Abgases wieder in Umlauf gebracht wird, indem der Teil in das Verbrennungsgas eingeschlossen wird, bevor dieses in den Motor eingeleitet wird;
- der Teil des Abgases von einem steuerbaren zweiten Kompressor (30) unter Druck gesetzt wird und in das Verbrennungsgas eingeleitet wird;
- ein erstes Signal gewonnen wird, das die Drehgeschwindigkeit des ersten Kompressors (14) ist;
- ein zweites Signal gewonnen wird, das die Drehgeschwindigkeit des zweiten Kompressors (30) ist;
- ein Rückkopplungssignal als eine Funktion des ersten Signals und des zweiten Signals gewonnen wird; und
- ein Bezugssignal als eine Funktion der Motorlast und der Drehgeschwindigkeit des Motors gewonnen wird; und
- ein Steuersignal, das zum Steuern des Betriebs des zweiten Kompressors (30) verwendet wird, erzeugt wird, indem das Rückkopplungssignal mit dem Bezugssignal verglichen wird.

2. Verfahren zum Betreiben eines Verbrennungsmotors nach Anspruch 1, **dadurch gekennzeichnet, dass** das Rückkopplungssignal als Geschwindigkeitsverhältnis gewonnen wird, das als ein Verhältnis des zweiten Signals zu dem ersten Signal definiert ist.

3. Verfahren zum Betreiben eines Verbrennungsmotors nach Anspruch 1, **dadurch gekennzeichnet, dass** das Bezugssignal auf Grundlage einer vorab definierten Karte von Bezugssignalwerten gewonnen wird, die in der Bezugssignal-Verarbeitungseinheit gespeichert sind oder für diese lesbar gemacht werden.

4. Steuersystem zum Steuern des Betriebs eines Verbrennungsmotors (1) umfassend einen ersten Kompressor (14), um das in den Motor (1) einzuleitende Verbrennungsgas unter Druck zu setzen; ein Abgasrückführungs-Leitungssystem (12), in welchem ein zweiter Kompressor (30) angeordnet ist, um das in den Motor einzuleitende rückgeführte Abgas unter Druck zu setzen;
wobei das Steuersystem aus Folgendem besteht:
- einer Eingabeeinheit (102), die angeordnet ist, um Messdaten zu empfangen, die den Betriebsstatus des Motors anzeigen einschließlich der Drehgeschwindigkeit des ersten Kompressors (14), der Drehgeschwindigkeit des zweiten Kompressors (30), der Motorgeschwindigkeit und der Motorlast;
- eine Bezugssignal-Verarbeitungseinheit (104), die angeordnet ist, um ein Bezugssignal (R) auf Grundlage mindestens der Motorgeschwindigkeit (Sₑ) und der Motorlast (L) zu gewinnen;
- eine Rückkopplungssignal-Verarbeitungseinheit (106), die angeordnet ist, um ein Rückkopplungssignal (F) als Funktion der Drehgeschwindigkeit (S₂) des zweiten Kompressors und der Drehgeschwindigkeit (S₁) des ersten Kompressors zu gewinnen;
- eine Steuerungseinheit (108), die angeordnet ist, um ein Steuersignal (C) zu gewinnen, das verwendet wird, um den Betrieb des zweiten Kompressors durch Vergleichen des Rückkopplungssignals (F) mit dem Bezugssignal (R) zu steuern.

5. Steuersystem nach Anspruch 4, **dadurch gekennzeichnet, dass** die Steuerungseinheit angeordnet ist, um den Steuersignalwert zu verringern, für den Fall, dass eine Differenz zwischen dem Rückkopplungssignal und dem Bezugssignal größer als ein vorbestimmter festgelegter Wert ist.

6. Steuersystem nach Anspruch 4, **dadurch gekennzeichnet, dass** die Steuerungseinheit angeordnet ist, um den Steuersignalwert zu erhöhen, für den Fall, dass eine Differenz zwischen dem Rückkopplungssignal und dem Bezugssignal kleiner als ein vorbestimmter festgelegter Wert ist.

7. Steuersystem nach Anspruch 4, **dadurch gekennzeichnet, dass** die Bezugssignal-Verarbeitungseinheit angeordnet ist, um ein Bezugssignal auf Grundlage einer vorab definierten Karte von Bezugssignalwerten zu gewinnen, die in der Bezugssignal-Verarbeitungseinheit gespeichert sind oder für diese lesbar gemacht werden.

## Revendications

1. Procédé de commande du fonctionnement d'un moteur à combustion interne (1) dans lequel procédé
- du gaz de combustion est pressurisé par un premier compresseur (14) et introduit dans le moteur ;
- du carburant est brûlé dans le moteur en utilisant le gaz de combustion pressurisé formant ainsi du gaz d'échappement ;
- le gaz d'échappement est retiré du moteur ;
- une partie du gaz d'échappement est recalculée en incluant la partie dans le gaz de combustion avant son introduction dans le moteur ;
- la partie du gaz d'échappement est pressurisée par un second compresseur pouvant être commandé (30) et introduite dans le gaz de combustion ;
- un premier signal étant que la vitesse de rotation du premier compresseur (14) est acquise ;
- un second signal étant que la vitesse de rotation du second compresseur (30) est acquise ;
- un signal de retour est acquis en fonction du premier signal et du second signal ;
- un signal de référence est acquis en fonction de la charge du moteur et de la vitesse de rotation du moteur ; et
- un signal de commande utilisé pour commander le fonctionnement du second compresseur (30) est établi en comparant le signal de retour au signal de référence.

2. Procédé de fonctionnement d'un moteur à combustion interne selon la revendication 1, **caractérisé en ce que** le signal de retour est acquis en tant que rapport des vitesses défini en tant que rapport du second signal au premier signal.

3. Procédé de fonctionnement d'un moteur à combustion interne selon la revendication 1, **caractérisé en ce que** le signal de référence est acquis en se basant sur une carte prédéfinie de valeurs de signal de référence conservées en mémoire dans, ou rendues lisibles par, l'unité de traitement du signal de référence.

4. Système de commande pour commander le fonctionnement d'un moteur à combustion interne (1) comprenant un premier compresseur (14) pour pressuriser le gaz de combustion à introduire dans le moteur (1) ; un système de conduits de recyclage de gaz d'échappement (12) dans lequel un second compresseur (30) est agencé pour pressuriser le gaz d'échappement recyclé à introduire dans le moteur ;
lequel système de commande comprend :
- une unité de saisie (102), agencée pour recevoir des données de mesure indiquant le statut opérationnel du moteur, incluant la vitesse de rotation du premier compresseur (14), la vitesse de rotation du second compresseur (30), la vitesse du moteur et la charge du moteur ;
- une unité de traitement du signal de référence (104) agencée pour acquérir un signal de référence (R) basé sur au moins la vitesse du moteur (Sₑ) et la charge du moteur (L) ;
- une unité de traitement du signal de retour (106) agencée pour acquérir un signal de retour (F) en fonction de la vitesse de rotation (S₂) du second compresseur et de la vitesse de rotation (S₁) du premier compresseur ;
- une unité de commande (108) agencée pour acquérir un signal de commande (C) utilisé pour commander le fonctionnement du second compresseur en comparant le signal de retour (F) au signal de référence (R).

5. Système de commande selon la revendication 4, **caractérisé en ce que** l'unité de commande est agencée pour faire baisser la valeur du signal de commande au cas où la différence entre le signal de retour et le signal de référence est supérieure à la valeur réglée prédéterminée.

6. Système de commande selon la revendication 4, **caractérisé en ce que** l'unité de commande est agencée pour faire augmenter la valeur du signal de commande au cas où la différence entre le signal de retour et le signal de référence est inférieure à la valeur réglée prédéterminée.

7. Système de commande selon la revendication 4, **caractérisé en ce que** l'unité de traitement du signal de référence est agencée pour acquérir un signal de référence basé sur une carte prédéfinie de valeurs de signal de référence conservées en mémoire dans, ou rendues lisibles par, l'unité de traitement du signal de référence.
